Europäisches Patentamt

European Patent Office

Office européen des brevets

(11) Publication number: 0 140 515
B1

## (12) EUROPEAN PATENT SPECIFICATION

(45) Date of publication of patent specification: 17.10.90

(21) Application number: 84305693.8

(22) Date of filing: 21.08.84

(51) Int. Cl.⁵: G 06 F 9/22

(54) Flexible computer control unit.

(30) Priority: 22.08.83 US 525745

(43) Date of publication of application:
08.05.85 Bulletin 85/19

(45) Publication of the grant of the patent:
17.10.90 Bulletin 90/42

(84) Designated Contracting States:
DE FR GB IT

(56) References cited:
US-A-4 307 379

PROCEEDINGS IEEE COMPCON 82, COMPUTER
NETWORKS, Washington, D.C. US, 20th-23rd
September 1982, pages 148-150, IEEE, New
York, US; C.B. SILIO, Jr.: "Control store
applications for multivalued circuits"
"Handbook of Semiconductor Memories" by
Michael M. Cirovic, 1981

(73) Proprietor: AMDAHL CORPORATION
1250 East Arques Avenue
Sunnyvale California94086 (US)

(72) Inventor: Lee, Hsiao-Peng Sherman
1131 Timberpine Court Sunnyvale
Santa Clara California (US)
Inventor: Spannagel, Ulrich
937 Linda Vista Way Los Altos
Santa Clara California (US)

(74) Representative: Crawford, Andrew Birkby et al
A.A. THORNTON & CO. Northumberland House
303-306 High Holborn
London WC1V 7LE (GB)

## Description

The present invention relates to the field of computers and, more particularly, to the field of control units and decoders utilized for controlling computers.

In computer systems, a control unit generates a large number of control signals to control the system or functional blocks within the system. The control unit typically includes a decoder unit for providing the control signals.

The control unit sometimes includes hardwired logic and sometimes includes a microprogrammed control store. Hardwired logic units can be cheaper in cost while microprogrammed control stores have greater flexibility.

Microprogrammed control stores operate by having control signals, sometimes called control patterns, read out directly from the control store. Since the contents of the control patterns can be easily changed, a control store provides flexibility whenever the control functions to be performed are to be changed. However, the cost of a control store can be high due to the amount of control membory reuired to store the control patterns.

Hardwired control logic can provide control patterns using the fewest number of circuits and therefore can have lower cost. However, hardwired logic has the problem of in-flexibility. When it is desirable to change the design of hardwired control logic, the design changes are often expensive and time consuming, particularly when the logic is embedded in semiconductor chips. The development stage of a computer using hardwired control logic is difficult because many changes in the control logic is difficult because many changes in the control logic occur at this time. Also, after the development stage when the final design is achieved and the product is ready for manufacture, frequently still additional changes are made. These changes either correct previously undetected problems or provide new functions not previously planned. Such changes in the past have proved expensive, difficult to make and time consuming for hardwired decoder units.

In order to overcome the inflexibility of hardwired logic, microprogram control stores are usually preferred because of their flexibility even though they are more expensive than hardwired decoder units.

In accordance with the above background, there is a need for improved control units and decoder units which are low cost and highly flexible.

A modified form of programmable logic array (a logic unit finding applications in code conversion, and peripheral and sequential controllers) — a field-programmable logic array (FPLA) — is disclosed in "Hand book of Semiconductor Memories" by Michael M. Cirovic, 1981, pp. 4—10 to 4—13. The FPLA has Nichrome fusible links that can be blown (open-circuited) to program the desired function, a first stage, producing first decoded outputs, used to form the product terms, or second decoded outputs, of the inputs (or their inverses), and a second stage which is used to OR the desired product terms and output them in inverted or straight form. The fusible links of the first stage may be programmed to provide ANDing of the appropriate inputs and similarly the links in the second stage chosen to select which product terms are to be ORed for each output. The FPLA further has output gates (exclusive OR gates) with fusible links connected to its inputs to determine if the outputs are to be inverted or not. An example is given of an array having 16 input variables, 48 possible product terms and 8 output lines. The reference does not suggest, however, a means of more flexibly programming the array beyond the conventional provision of the fusinig of the links in the array's logic circuitry. Further, the arrangement does not provide for the array being further programmed subsequent to factory — or field-programming; also, further programming of the array in such a case would involve the inconvenience of removing the chip containing the array from its circuit board and, since additionally links in the array would be fused, the programming process would be irreversible. The present invention aims to provide increased flexibility in the programming of such devices and to overcome the above-described disadvantages of conventional arrangements.

The present invention provides a decoder for decoding multi-bit keys to form control patterns represented by a plurality of output bits, said decoder comprising:

primary means for decoding each of said multi-bit keys to form a plurality of primary decoded outputs and alternate means for decoding each of said multi-bits keys to form a plurality of alternate decoded outputs;

output means including a plurality of output gates providing said output bits representing control patterns, including means for connecting each one of said plurality of primary decoded outputs to different ones of said output gates whereby each primary decoded output causes said output gates to provide different control pattern and including plurality of flexibility inputs where each flexibility input is connected to one of said output gates;

connection means external to the decoder for reversibly connecting one or more of said alternate decoded outputs to one or more of said flexibility inputs whreby each alternate decoded output connected to a flexibility input causes said output gates to provide a unique control pattern.

Because of the flexibility, the control patterns formed by the hardwired decoder can be readily changed. The flexible hardwired decoder is of great value, therefore, when design changes are desired in a computer.

The control unit of the present invention includes flexible hardwired decoder and a random acess memory for storing control information such as a microprogram. The memory sequentially supplies M-bit keys to the hardwired decoder. Each time a key is presented, the hard-

**EP 0 140 515 B1**

wired decoder decodes the key and provides N output bits which are latched into a control register to form the binary control pattern. The control pattern is distributed to functional units to control the data processing system. To change the control pattern, one or more of the alternate decoded outputs are connected to one or more of the flexibility inputs. The flexibility inputs are typically connected into each OR gate in the final output stage of the hardwired logic. With these connections, any one of $2^N$ different control patterns can be added to the hardwired logic. In this manner, control of the computer can be changed. A maximum of $2^M$ control patterns (from a possible $2^N$) can be decoded.

The foregoing and other objects, features and advantages of the invention will be apparent from the following more detailed description of preferred embodiments of the invention as illustrated in the accompanying drawings.

Brief Description of the Drawings

FIG. 1 depicts a schematic block diagram of a control unit connected in a computer or other data processing system for controlling the operation of the system.

FIG. 2 depicts a schematic block diagram of a decoder unit used in the FIG. 1 system.

FIG. 3 depicts a schematic logic diagram of the decoder unit of FIG. 2.

FIG. 4 depicts an OR array for use in the decoder of FIGS. 2 and 3 to provide OR'ed combinations of alternate decoded outputs.

FIG. 5 depicts multiple-key embodiment of a decoder unit.

Detailed Description

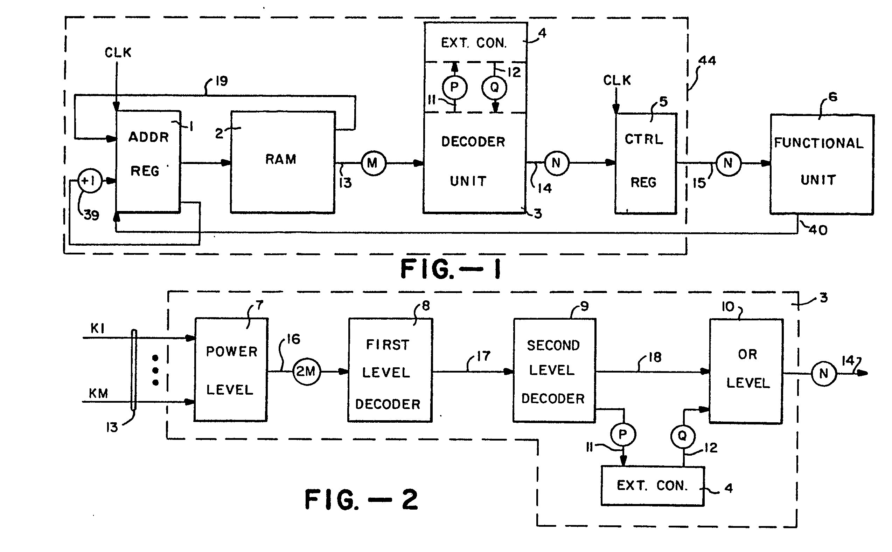

Control Unit-FIG. 1

In FIG. 1, a control unit 44 includes a decoder unit 3 which receives an M-bit key (k1, k2 . . ., km) on the bus 13 from the random access memory 2. Decoder unit 3 provides the N-bit binary control pattern to the control register 5. Control register 5 supplies the binary control pattern to functional uit 6 and other parts of the FIG. 1 system. Random access memory 2, address register 1, decoder unit 3 and control register 5 form the control unit 44. The control unit 44 together with the functional unit 6 typically form a computer or some subunit within a computer.

In FIG. 1, the output on bus 19 from the memory 2 is the next address to be used to address memory 2. The address register 1 is loaded either from bus 19 or incremented by +1 through incremented 39. The loading of register 1 is under control of control line 40 from unit 6 which in turn is controlled by the control pattern in the control register 5.

The memory 2 contains a microprogram which defines sequences of control patterns to be loaded into control register 5 to control the functional unit 6. Each microprogram word includes two parts, a next address field and one or more key fields. The key field or fields connect as an input to decoder unit 3. The next address field connects through bus 19 as an input to the address register 1. The key field or fields on bus 13 are decoded by the decoder unit 3 to provide a unique N-bit control pattern to be latched into the control register 5.

The FIG. 1 system is controlled by a clock signal (CLK) in a conventional manner. During each cycle, the address in register 1 addresses memory 2 which in turn provides the next address to register 1 and the next control pattern to register 5. At the end of the cycle, the next address is clocked into register 1 and the control pattern is clocked into register 5.

Each step of the microprogram provides a control pattern by identifying the key or keys to that pattern. Modifying a microprogram step amounts to replacing one key for one pattern by the key of a new pattern. If this new pattern is already defined, no change to the decoder is needed. This type of change accounts for many microprogram changes. If the new control pattern is not defined, a new key must be assigned to this new pattern and the decoder must be modified to decode this new key.

The decoder unit 3 also provides P alternate decoded outputs to an external connector 4. External connector 4 provides Q flexibility inputs to the decoder unit 3. Typically, Q equals N. The function of the external connector 4 is to connect one or more of the P alternate decoded outputs to one or more of the Q flexibility inputs. In this way, the N-bit output to the control register 5 can be modified according to the connections made in the external connector 4.

Only a small subset of all possible combinations of control patterns are utilized in a system. The key is assigned to each defined combination to take advantage of this characteristic. The control pattens in control register 5 consist of N binary bits, the M-bit (k1, k2, . . , km) key generally has fewer bits than the N-bit control pattern. By storing the M-bit key in memory 2 instead of the N-bit control pattern, the size of memory 2 is reduced significantly.

In one example of a system, the control pattern has 99 bits. N equals 99. Also, at most 512 different control patterns are employed in the system. The 512 control patterns are defined by a nine-bit key (k1, k2, . . ., k9). M equals 9. Key bits are decoded to specify one of up to 512 different patterns. Since there are 99 bits in the control pattern, the total number of possible control patterns is $2^{99}$. Only 512 of the $2^{99}$ patterns can be specified by the 9-bit key.

In an example where 1000 (1k) control store words are implemented, storage of the encoded key bits k1 through k9 requires 9000 bits (9k) in memory 2. However, if the 99-bit control patterns were actually stored in the memory 2 instead of the 9 bit keys, 99,000 bits (99k) of storage would be required. By storing only the 9-bit keys rather than the 99-bit control patterns, 90k bits of storage are saved. the cost of the decode for decoding the 9-bit key into the 99 bit control pattern is generally much smaller than the cost of additional memory to store the 99-bit control patterns. In order that the accessing and the decoding of the keys can be carried out in the same clock cycle, the decoder is hardwired.

If the hardwired decoder does not have the flexibility features of the present inventions, only preassigned keys and their decoded control patterns are possible. If a new key (and new control pattern) is to be added, then the decoder must be remanufactured to accommodate this new key unless the new control patterns were anticipated and designed as spares into the decoder. Such anticipation is difficullt. Furthermore, it is not practical to design all possible decodes into a decoder, since only a small percentage of al possible decodes are actually needed. In the example given, only 512 or fewer of the possible $2^{99}$ control patterns are actually employed.

When a decoder is implemented in LSI chips, costly and time-consuming chip redesign and remanufacture is required to implement any control pattern change unless the flexibility features of the present invention are employed.

In the present invention, the need for decoder chip redesigns are reduced since changes can be made on interchip connections located external to the chip and typically on the multi-chip carrier (MCC). Such changes can be made easily and quickly.

The basic decoder chip is modified to include the following:

(1) For each control pattern generated by a decoder chip, an extra input called a Flexibility Input, is added as an off-chip connection to the OR gate that produces the control pattern bit.

(2) One or more keys, initially unused, are decoded and connected to an output terminal to form alternate decoded outputs available for future use.

When a new control pattern is required, the alternate decoded output of the unused but decoded key is externally connected to the flexibility input of each control pattern bit that should be turned "on" in the new control pattern.

The connections from the unused alternate decoded key outputs to the flexibility inputs are made external to the chips and require only discrete wire additions to the MCC.

The designer of the microprogram and the chips can vary the number of alternate decoded outputs for unused keys. If the unused decoded keys become exhausted due to several design changes, a redesign of the decoder chip must take place and such redesign can absorb all the previous changes. At that time, new unused keys can again be included to provide for any future changes.

Decode Unit-FIG. 2

In FIG. 2, a schematic representation of the decoder unit 3 of FIG. 1 is shown. The decoder unit 3 includes a power level 7, a first-level decoder 8, a second-level decoder 9 and an OR-level 10. The power level 7 receives the M-bit key (k1, k2, . . . kM) on the bus 13. The power level 7 phase splits the M-input signals to form 2M signals which then are selectively used in the first-level decoder 8. The first-level decoder 8 selects predetermined combinations of the 2M signals from the power level 7 to provide partially decoded signals on lines 17 to the second level decoder 9. The second-level decoder 9 in turn selects predetermined combinations of these partially decoded signals to provide the decoded signals on lines 18. The OR level 10 combines the outputs of the second level decoder 9 to provide the N output control signals.

In FIG. 2, the output from the second-level decoder 9 includes the P alternate decoded outputs 11 which connect to the external connector 4. The external connector 4 also provides the Q flexibility inputs 12 to the OR level 10.

Decoder Unit Detail-FIG. 3

In a typical large scale integration (LSI) embodiment, the alternate decode lines 11 are sent to off-chip terminals 33—1, 33—2, . . ., 33—P. The flexibility lines 12 are inputs from the off-chip terminals 35—1, 35—2, . . ., 35—N to the OR gates 25—1, . . ., 25—N. Connections can be made beween selected members of the lines 11 and selected members of the lines 12 using discrete connection wires between the off-chip terminals 33—1, 33—2, . . ., 33—P and 35—1, 35—2, . . ., 35—N.

In FIG. 3, further details of a particular design of the decoder unit 3 of FIG. 2 are shown. The power level 7 includes the M gates 20—1, . . ., 20—M where each gate develops the true and complement signal for the respective input signals k1, k2, . . ., kM. the first-level decoder 8 includes a first group of gates 21 which receive selected combinations of the outputs from gates 20—1 through 20—M. The gates 21 in turn provide their outputs as inputs to the second level decoder 9. Second-level decoder 9 includes a representative gate 23 which combines selected outputs from the gates 21. The output from gate 23 represents a final decode of one key. The gates 21 and 23 are representative of one key decode block 28 which decodes KEY1, one of the possible $2^M$ keys. Many similar combinations of gates like gates 21 and 23 form other blocks to decode other ones of the $2^M$ keys. For example, block 29 decodes KEY512, another one of the $2^M$ keys. Key 512 is one of the alternate keys which is initially unused and which connects on line 27 to an off-chip terminal 33—1.

The key bits are first partially decoded by the first level decode gates such as 21 and 22. In this particular design, the first three key bits are partially decoded by a group of gates and the next three key bits are partially decoded by a different group of gates. This continues until the key bits are exhausted. The second level decode 9 completely decodes the key.

The partitioning of the decoder into a first level 8 and into a second level 9 is merely based on the decoder design approach. In the example described, decoded outputs are presented as fundamental products of the key. Of course, the outputs can also include implicants of the key.

In FIG. 3, the decoded output KEY1 from gate 23 is shown as typical and is connected as an input to any selected ones of the OR gates 25—1 to 25—N which in turn provide the N output signals on line 14 to the control register 5 of FIG. 1. Each OR gate 25—1 to 25—N which is connected to gate 23 will provide a logical "1" and each OR gate which is not connected will provide a logical "0" whenever KEY 1 is decoded.

The OR gate 25—1 also receives KEY3 input from a key decode block (not shown) like block 28 so that line 14—1 will be a logical "1" whenever KEY1 or KEY3 is decoded. The OR gate 25—1 also receives inputs from any other key decode blocks which require that bit line 14—1 be energized when that particular key is decoded. OR gate 25—1 includes one of the flexibility inputs FI1, on line 26 from the off-chip terminal 35—1 in external connector 4. If the terminal 35—1 and input line 26 are not connected to an alternate decoded key, then the output from OR gate 25—1 is not energized by the decode of any alternate key. If the terminal 35—1 and the flexible input line 26 are connected, as shown to terminal 33—4, then the output on line 14—1 from gate 25—1 is a logical "1" when KEY512 is decoded.

In FIG. 3, the first-level decoder gates 22 are similar to the gates 21. The gate 24 in the second-level decoder 9 is similar to the gate 23. Together gates 22 and 24 form decode block 29 which provides on line 27 the KEY512 decode, one of the lines in bus 11. In one example, the external connector 4 connects the line 27 to the line 26 in the embodiment of FIG. 3. Combinations similar to decoding gates 22 and 24 can be provided by other alternate decode lines 11.

In FIG. 3, the control pattern output from the decoder unit 3 is changed as a function of the external connection made in the connector 4 between terminals 33—1, 33—2, . . ., 33—P and terminals 35—1, . . ., 35—N. The external connection in connector 4 provides the ability to make changes in the hardwired decoder. Such changes are important when the decoder unit 3 is used as part of a compouter or other data processing system in which control pattern changes are made from time to time.

OR Array-FIG. 4

When more than one unused key is decoded for later assignments to new control patterns, it is desirable to provide vaious OR'ing combinations of these keys to the decoder chip outputs. This OR'ing eliminates off chip OR'ing of the decoded keys when more than one key must turn "on" a particular bit in a new control pattern.

The OR gates in FIG. 4 are used to form various combinations of the alternate decoded keys, like KEY512 in FIG. 3. For example, of the keys KEY509, KEY510, KEY511, KEY512 are decoded as alternate keys in the FIG. 3 device, the OR'ed combinations of those alternate decoded keys are provided as indicated in FIG. 4. More specifically, the alternate decoded KEY509 connects through the gate 31—1 to an off-chip terminal 33—1. Whenever the KEY509 is to be connected as an input to one of the flexibility inputs in the external connector 4, a wire is connected from terminal 33—1 to the appropriate one of the terminals for the flexibility input in connector 4.

If the alternate key decode KEY509 and the alternate key decode KEY511 are to be connected to the same flexibility input, then the terminal 33—6 from the OR gate 31—6 is connected to the desired flexibility input in the external connector 4. It is apparent that any logical combination of the alternate keys, KEY509 through KEY512 can be connected to the same flexibility input. The OR structure of FIG. 4 permits alternate keys to be combined before connection to a terminal external to a chip. In this way, the need for logically combining signals external to the chips can be avoided. The only connections which are required to be made are jumper connections between a decoded key terminal and a flexibility input terminal. In this way the signal delays and complexities encountered in extensive off-chip connections are kept to a minimum.

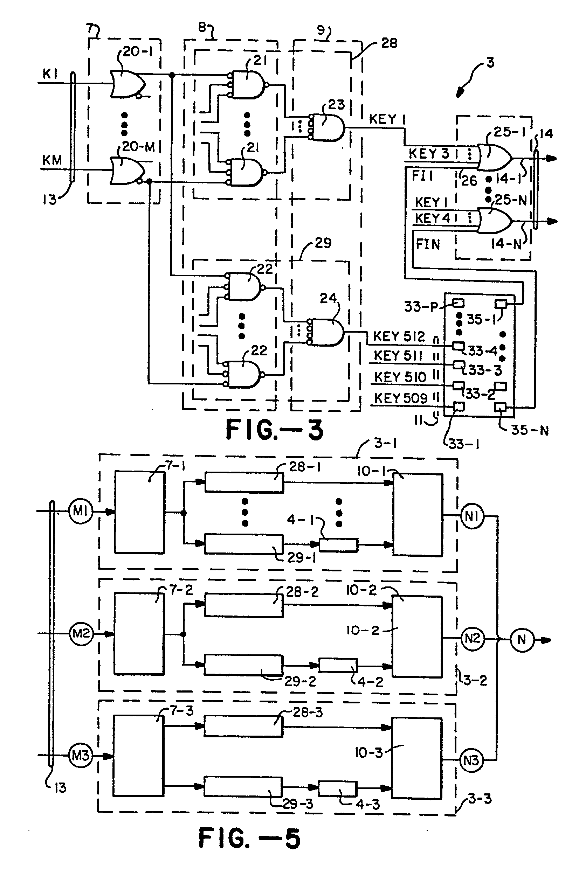

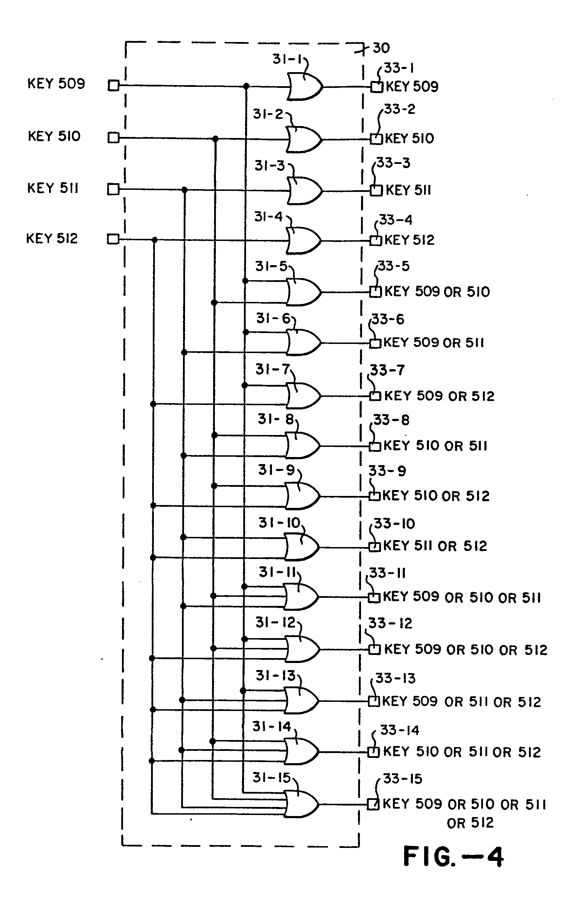

Multi-Key Decoder-FIG. 5

In FIG. 5, an alternate embodiment of the decoder unit 3 of FIG. 1 is shown. The decoder unit 3 of FIG. 5 differs from the decoder units of FIGS. 2 and 3 in that rather than a single encoded M-bit input key, as appears on lines 13 of FIG. 2, the FIG. 5 embodiment includes three separate keys having M1, M2 and M3 bits on input lines 13—1, 13—2 and 13—3, respectively. In FIG. 5 the sum of M1, M2 and M3 typically is greater than M in FIG. 1. In one example, M1, M2, and M3 are 4 bits, 7 bits and 5 bits for a total of 16 bits.

With this structure each entry in the microprogram in the memory 2 includes four fields, namely, the next address field, the M1 key field, the M2 key field and the M3 key field. Accordingly the output lines 13 from the memory 2 of FIG. 1 are divided into three groups of encoded key lines, namely lines 13—1, 13—2 and 13—3. The lines 13—1, 13—2 and 13—3 connect as inputs to decoder units 3—1, 3—2 and 3—3, respectively.

Each of the decoder units 3—1, 3—2 and 3—3 are analogous to the decoder unit 3 of FIGS. 2 and 3. Each decoder unit includes a power level 7—1, 7—2 and 7—3 respectively. The power levels in turn provide the signals to the groups of decoders. For example, in the control unit 3—1 the power level 7—1 supplies encoded key inputs to a key decoder 28—1 which is analogous to the key decoder 28 in FIG. 3. Similarly, an alternate key decoder 29—1 in FIG. 5 corresponds to the alternate decoder 29 of FIG. 3. The key decoded outputs from the decoders 28—1 and 29—1 are selectively connected to the OR unit 10—1 to provide the first N1 bits of the control pattern.

In a similar manner, both the decoder units 3—2 and 3—3 include corresponding key decoders and alternate decoders and correspnding OR units. The decoder unit 3—2 provides the next N2 bits of the control pattern and the decoder unit 3—3 provides the last N3 bits of the control pattern. The N-bit control pattern on lines 14 is formed by the combination of the N1-bit, the N2-bit and the N3-bit outputs from the decoder units 3—1, 3—2 and 3—3, respectively. The use of N1, N2 and N3 is equal to N.

When the value of N, representing the number of bits in the control pattern, is the same in FIG. 2 and in FIG. 5 the decoders in FIG. 5 can be somewhat simpler compared with the decoder required in FIG. 2. However, since the sum of M1, M2, and M3 in FIG. 5 is greater than M in FIG. 2, the FIG. 5 embodiment requires more storage bits to store the keys.

In FIG. 5, the external connector units 4—1, 4—2, and 4—3 serve the sme function as the connector unit 4 in FIGS. 2 and 3. The use of multiple keys as indicated in the FIG. 5 embodiment provides additional flexibility in the microprograms stored in the memory 2 since a change in any one control field will not affect the other control fields.

## Claims

1. A decoder for decoding multi-bit keys (M) to form control patterns represented by a plurality of output bits, said decoder comprising:

primary means (28) for decoding each of said multi-bit keys to form a plurality of primary decoded outputs (19) and alternate means (29) for decoding each of said multi-bit keys to form a plurality of alternate decoded outputs (11);

output means (10) including a plurality of output gates (25) providing said output bits representing control patterns, including means for connecting each one of said plurality of primary decoded outputs to different ones of said output gates whereby each primary decoded output causes said output gates to provide a different control pattern and including a plurality of flexibility inputs (12) where each flexibility input is connected to one of said output gates;

connection means (4) external to the decoder for reversibly connecting one or more of said alternate decoded outputs to one or more of said flexibility inputs whereby each alternate decoded output connected to a flexibility input causes said output gates to provide a unique control pattern.

2. A decoder according to claim 1 wherein the number, M, of bits in said keys is less than the number of bits, N, in said control patterns.

3. A decoder for decoding a plurality of multibit keys (M₁, M₂) to form a plurality of control patterns, one control pattern for each key, said decoder comprising, for each key,

primary means (28) for decoding each of said multi-bit keys to form a plurality of primary decoded outputs and alternate means (29) for decoding each of said multi-bit keys to form a plurality of alternate decoded outputs,

output means (10) including a plurality of output gates providing said output bits representing control patterns, including means for connecting each one of said plurality of primary decoded outputs to different ones of said output gates whereby each primary decoded output causes said output gates to provide a different control pattern and including a plurality of flexibility inputs where each flexibility input is connected to one of said output gates,

connection means (4) external to the decoder for reversibly connecting one or more of said alternate decoded outputs to one or more of said flexibility inputs whereby each alternate decoded output connected to a flexibility input causes said output gates to provide a unique control pattern.

4. A decoder according to claim 1, 2 or 3, wherein said primary means (28), said alternate means (29), and said output means (10) are fabricated on a semiconductor chip and wherein said alternate decoded outputs connect to output terminals (33) and said flexibility inputs connect to input terminals (35) external to said chip and where said connections means (4) connects said one or more alternate decoded outputs to said one or more flexibility inputs by connections external to said chip between said output terminals and said input terminals.

5. A decoder according to any one of the preceding claims wherein said output means (10) includes an OR array forming OR'ed combinations of a plurality of alternate decoded outputs to provide OR'ed outputs to said output terminals.

6. A decoder according to any one of the preceding claims wherein OR'ed combinations of alternate decoded outputs are connected to different ones of said flexibility inputs.

7. A decoder according to any one of the preceding claims wherein said output gates are OR gates.

8. A control unit for forming control patterns represented by a plurality of output bits, said control unit comprising,

a random access memory (2) having addressable locations where each location has fields for strong a next-address and a multi-bit key, means (1) for cyclically addressing said random access memory to provide a next-address and a multi-bit key, and a decoder according to any one of the preceding claims.

9. A control unit for forming a plurality of control patterns, each control pattern represented by a plurality of outputs bits, said control unit comprising,

a random access memory (2) having addressable locations where each location has fields for storing a next-address and plurality of multi-bit keys, each key representing one of said control patterns,

means (1) for cyclically addressing said random access memory to provide a next-address and a plurality of multi-bit keys.

a plurality of decoder means (3), each one of said decoder means (3) for decoding one of said multi-bit keys from said random access memory (2), each one of said decoder means (3) being according to any one of claims 1 to 7.

10. In an integrated circuit, an apparatus connected to receive a sequence of multi-bit keys, for generating control patterns consisting of a plurality of control signals, comprising:

primary means (28), connected to receive the sequence of multi-bit keys, for detecting a primary set of the multi-bit keys, and for generating a primary key decode signals corresponding to each of the multi-bit keys in the primary set;

alternate means (29), connected to receive the sequence of multi-bit keys, for detecting an alternate set of multi-bit keys, the alternate set having multi-bit keys not included in the primary set, and for generating alternate key decode signals corresponding to each of the multi-bit keys in the alternate set;

output means (33), connected to receive the alternate key decode signals from the alternate means (29), for supplying the alternate key decode signals externally from the integrated circuit as output signals;

input means (35), connected to receive input signals externally supplied to the integrated circuit, for supplying the input signals internally to the integrated circuit; and

a plurality of output gates (25) for supplying the control signals, each output gate having a primary input connected to receive one of the primary key decode signals, an alternate input connected to receive one of the input signals from the input means and an output supplying one of the control signals;

the input means and output means being adapted for communication with connection means (4), external to the integrated circuit and responsive to the output signals, for reversibly connecting the input signals.

11. The apparatus of claim 10, further including:

combining means (30, in the integrated circuit connected to receive a subset of the alternate key decode signals from the alternate means (29), for generating combined alternate key decode signals for preselected combinations of alternate key decode signals, and means for supplying the combined alternate key decode signals to the output means (33), and wherein

the output means (33) includes means for supplying the combined alternate key decode signals externally from the integrated circuit as output signals.

12. The apparatus of claim 11, wherein the combining means (30) comprises an array of OR gates (31), each OR gate in the array providing as an output signal one of the combined alternate key decode signals and having a plurality of inputs, each connected to receive one of the alternate key decode signals from the subset of the alternate key decode signals.

13. The apparatus of claim 10, wherein:

the output means (33) includes a plurality of output paths (11), adapted to be connected to a wire external to the integrated circuit; and the input means (35) includes a plurality of input paths (12), adapted to be connected to wires external to the integrated circuit, whereby the output means (33) and input means (35) are adapted to be selectively interconnected through the external connections means.

14. The apparatus of claim 10, wherein the multi-bit keys include M-bits, where M is an integer and the control patterns include N control signals, and M is less than N.

15. The apparatus of claim 10, wherein the output gates are OR-gates.

**Patentansprüche**

1. Dekodierer zum Dekodieren von Mehrbitschlüsseln (M) zum Bilden von Steuermustern, die durch mehrere Ausgangsbits repräsentiert werden, enthaltend:

eine primäre Einrichtung (28) zum Dekodieren eines jeden der Mehrbitschlüssel zur Bildung mehrerer primär dekodierter Ausgänge (19) und eine alternative Einrichtung (29) zum Dekodieren eines jeden der Mehrbitschlüssel zur Bildung mehrerer alternativer dekodierter Ausgänge (11);

eine Ausgabeeinrichtung (10) mit mehreren Ausgabetoren (25), die die Ausgangsbits Liefern, die Steuermuster repräsentieren, enthaltend eine Einrichtung zum Verbinden eines jeden der primär dekodierten Ausgänge mit verschiedenen der Ausgangstore, wodurch jeder primär dekodierte Ausgang bewirkt, daß die Ausgangstore ein anderes Steuermuster liefern, und enthaltend mehrere Flexibilitätseingänge (12), wo jeder Flexibilitätseingang mit einem de Ausgangstore verbunden ist;

Verbindungseinrichtungen (4) außerhalb des Dekodierters zum reversiblen Verbinden eines oder mehrerer der alternativen dekodierten Ausgänge mit einem oder mehreren der Flexibilitätseingänge, wodurch jeder alternative dekodierte Ausgang, der mit einem Flexibilitätseingang verbunden ist, bewirkt, daß die Ausgangstore ein einzigartiges Steuermuster liefern.

2. Dekodierer nach Anspruch 1, bei dem die Anzahl M der Bits in den Schlüsseln kleine als die Anzahl M der Bits in den Steuermustern ist.

3. Dekodierer zum Dekodieren mehrerer Mehrbitschlüsseln ($M_1$, $M_2$) zur Bildung mehrerer Steuermuster, ein Steuermuster für jeden Schlüssel, enthaltend für jeden Schlüssel:

eine primäre Einrichtung (28) zum Dekodieren eines jeden der Mehrbitschlüsseln, um mehrere primär dekodierte Ausgänge zu bilden, und eine alternative Einrichtung (29) zum Dekodieren der Mehrbitschlüssel zur Bildung mehrerer alternativer dekodierter Ausgänge,

eine Ausgangseinrichtung (10) mit mehreren Ausgangstoren, die die Steuermuster repräsentierenden Ausgangsbits liefern, enthaltend eine Einrichtung zum Verbinden eines jeden der primär dekodierten Ausgänge mit verschiedenen der Ausgangstore, wodurch jeder primäre dekodierte Ausgang bewirkt, daß die Ausgangstore ein anderes Steuermuster liefern, und enthaltend mehrere Flexibilitätseingänge, wo jeder Flexibilitätseingang mit einem der Ausgangstore verbunden ist, Verbindungseinrichtungen (4) außerhalb des Dekodierters zum reversiblen Verbinden eines oder mehrerer der alternativen dekodierten Ausgänge mit einem oder mehreren der Flexibilitätseingänge, wodurch jeder alternative dekodierte Ausgang, der mit einem Flexibilitätseingang verbunden ist, bewirkt, daß die Ausgangstore ein einzigartiges Steuermuster liefern.

4. Dekodierer nach Anspurch 1, 2 oder 3, bei der die primäre Einrichtung (28) die alternative Einrichtung (29) und die Ausgangseinrichtung (10) auf einem Halbleiterchip hergestellt sind und wobei die alternativen dekodierten Ausgänge mit Ausgangsanschlüsen (33) verbunden sind und die Flexibilitätseingänge mit Eingangsanschlüssen (35) außerhalb des Chips verbundfen sind, und wobei die Verbindungseinrichtungen (4) eine oder mehrere alternative dekodierte Ausgänge mit einem oder mehreren Flexibilitätseingängen durch Verbindungen außerhalb des Chips zwischen den Ausgangsanschlüssen und den Eingangsanschlüssen verbinden.

5. Dekodierere nach einem der vorhergehenden Ansprüche, bei dem die Ausgangseinrichtung (10) eine ODER-Gruppe enthält, die ODER-geschaltete Kombinationen von mehreren alternativen dekodierten Ausgängen bilden, um ODER-geschaltete Ausgänge an die Ausgangsanschlüsse zu liefern.

6. Dekodierer nach einem der vorhergehenden Ansprüche, bei dem die ODER-geschalteten Kombinationen de alternativen dekodierten Ausgänge mit verschiedenen der Flexibilitätseingänge verbunden sind.

7. Dekodierere nach einem der vorhergehenden Ansprüche, bei dem die Ausgangstore ODER-Schaltungen sind.

8. Steuereinheit zum bilden von Steuermustern, die durch mehrere Ausgangsbits repräsentiert werden, enthaltend:
einen Speicher mit wahlfreiem Zugriff (2), der adressierbare Plätze aufweist, wobei jeder Platz Felder zum Speichern einer nächsten Adresse und eines Mehrbitschlüssels hat,
eine Einrichtung (1) zum zyklischen Adressieren des Speichers mit wahlfreiem Zugriff, um eine nächste Adresse und einen Mehrbitschlüssel zu liefern, un deinen Dekodierer nach einem der vorhergehenden Ansprüche.

9. Steuereinheit zum bilden von Steuermuster, die jeweils durch mehrere Ausgangsbits repräsentiert sind, enthaltend:
einen Speicher mit wahlfreiem Zugriff (2), der adressierbare Plätze ha, wobei jede Platz Felder zum Speichern einer nächsten Adresse und mehrerer Mehrbitschlüssel hat, wobei jeder Schlüssel eines der Steuermuster repräsentiert,
eine Einrichtung (1) zum zyklischen Adressieren des Speichers mit wahlfreiem Zugriff, um eine nächste Adresse un dmehrere Mehrbitschlüssel zu liefern,
mehrere Dekodiereinrichtungen (3), wobei jede der Dekodiereinrichtungen (3) einen der Mehrbitschlüssel von dem Speicher mit wahlfreiem Zugriff (2) dekodiert, wobei jede der Dekodiereinrichtungen (3) eine Struktur nach einem der Ansprüche 1 bis 7 aufweist.

10. In einer integreierten Schaltung eine Vorrichtung, die angeschlossen ist, eine Folge von Mehrbitschlüsseln aufzunehmen, um Steuermuster zu erzeugen, die aus mehreren Steuersignalen bestehen, enthaltend:
eine primäre Einrichtung (28), die angeschlossen ist, die Folge von Mehrbitschlüssel zu empfangen, zur Detektierung eines primären Satzes der Mehrbitschlüssel und zum Erzeugen von primären Schlüsseldekodiersignalen, die jedem der Mehrbitschlüssel in dem primären Satz entsprechen;
eine alternative Einrichtung (29), die angeschlossen ist, die Folge von Mehrbitschlüsseln zu empfangen, zur Detektierung eines alternativen Satzes von Mehrbitschlüsseln, wobei der alternative Satz Mehrbitschlüsseln, wobei der alternative Satz Mehrbitschlüssel enthält, die nicht in dem primären Satz enthalten sind, und zum Erzeugen alternativen Schlüsseldekodiersignale entsprechend jedem der Mehrbitschlüssel in dem alternativen Satz;
eine Ausgangsenrichtung (33), die angeschlossen ist, die alternativen Schlüsseldekodiersignale von der alternativen Einrichtung (29) zu empfangen, um die alternativen Schlüsseldekodiersignale außerhalb von der integrierten Schaltung als Ausgangssignale abzugeben;
eine Engangseinrichtung (35), die angeschlossen ist, die Eingangssignale zu empfangen, die von außen zu der integrierten Schaltung zugeführt werden, um die Eingangssignale nach innen der integrierten Schaltung zuzuführen;
eine Vielzahl von Ausgangstoren (25) zum Liefern der Steuersignale, wobei jedes Ausgangstor einen primären Schlüsseldekodiersignale zu empfangen, und einen alternativen Eingang hat, der angeschlossen ist, eines der Eingangssignale von der Eigangseinrichtung zu empfangen und einen Ausgang hat, der eines der Steuersignale liefert;
wobei die Eingangseinrichtung und die Ausgangseinrichtung zur Verbindung mit Verbindungseinrichtungen (4) eingerichtet sind, die außerhalb der interierten Schaltung sind und auf die Ausgangssignale ansprechen, um die Eingangssignale reversibel anzulegen.

11. Vorrichtung nach Anspruch 10, weiterhin enthaltend:
eine Kombinationseinrichtung (30) in der integrierten Schaltung, die angeschlossen ist, einen Untersatz der alternativen Schlüsseldekodiersignale von der alternativen Einrichtung (29) aufzunehmen, um kombinierte alternative Schlüsseldekodiersignale für vorgewählte Kombinationen alternativer Schlüsseldekodiersignale zu erzeugen, und eine Einrichtung zum Abgeben der kombinierten alternativen Schlüsseldekodiersignale an die Ausgangseinrichtung (33), und wobei
die Ausgangseinrichtung (33) eine Einrichtung zum Abgeben der kombinierten alternativen Schlüsseldekodiersignale von der integrierten Schaltung nach außen als Ausgangssignale enthält.

12. Vorrichtung nach Anspruch 11, bei der die Kombinationseinrichtung (30) eine Gruppe von ODER-Schaltungen (31) enthält, wobei jede ODER-Schaltung in der Gruppe als ein Ausgangssignal eines der kombinierten alternativen Schlüsseldekodiersignale liefert und mehrere Eingänge hat, von denen jede angeschlosen ist, eines der alternativen Schlüsseldekodiersignale von dem Untersatz der alternativen Schlüsseldekodiersignale zu empfangen.

13. Vorrichtugn nach Anspurch 10, bei der:

die Ausgangseinrichtng (33) mehrere Ausgangspfade (11) enthält, die dazu eingerichtet sind, mit einem Draht außerhalb der integrierten Schaltung verbunden zu werden; und

die Eingangseinrichtung (25) mehrere Eingangspfade (12) enthält, die daz eingerichtet sind, mit Drähten außerhalb der integrierten Schaltung verbunden zu werden, wodurch die Ausgangseinrichtung (33) und die Eingangseinrichtung (35) dazu eingerichtet sind, selektiv duch die äußeren Verbindungseinrichtungen verbunden zu werden.

14. Vorrichtung nach Anspruch 10, bei der die Mehrbitschlüssel M-Bits enthalten, wobei M eine ganze Zahl ist, und die Steuermuster N Steursignale enthalten, wobei M kleiner als N ist.

15. Vorrichtung nach Anspruch 10, bei der die Ausgangstore ODER-Schaltungen sind.

**Revendications**

1. Décodeur pour décoder des codes à plusieurs bits (M) afin de former des configurations de commande répresentées par un ensemble de bits de sortie, le décodeur comprenant:

un moyen principal (28) pur décode chacun des codes à plusieurs bits afin de former un ensemble de signaux de sortie décodés principaux (18) et un moyen de remplacement (29) pour décoder chacun des codes à plusieurs bits afin de former un ensemble de signaux de sortie décodes de remplacement (11);

un moyen de sortie (10) incluant un ensemble de portes de sortie (25) fournisant les bits de sortie représentant les configurations de commande, incluant un moyen pour connecter chacune de l'ensemble de sorties décodées principales à différentes portes parmi les portes de sortie, chaque signal de sortie décodé principal faisant ainsi en sorte que les portes de sortie fournissent une configuration de commande différente, et incluant un ensemble d'entrées de souplesse (12), chaque entrée de souplesse étant connectée à une des portes de sortie;

un moyen de connexion (4) extérieur au décodeur pour connecter de façon inverse une ou plusieurs sorties décodées de remplacement à une ou plusieurs entrées de souplesse, chaque sortie décodée de remplacement connectée à une entrée de souplesse faisant ainsi en sorte que les portes de sortie fournisent une configuration de commande unique.

2. Décodeur selon la revendication 1, dans lequel le nombre, M, de bits dans les codes est inférieur au nombre de bits, N, dans les configurations de commande.

3. Décodeur pour décoder un ensemble de codes à plusieurs bits (M₁, M₂) afin de former un ensemble de configuratins de commande dont une configuration de commande pour chaque code, le décodeur comprennant, pour chaque code,

un moyen principal (28) pour décoder chacun des codes à plusierus bits afin de former un ensemble de signaux de sortie décodés principaux et un moyen de remplacement (29) pour décoder chacun des codes à plusieurs bits afin de former un ensemble de signaux de sortie décodés de remplacement,

un moyen de sortie (10) incluant un ensemble de portes de sortie fournissant les bits de sortie représentant des configurations de commande, incluant un moyen pour connecter chacune de l'ensemble des sorties décodées principales à différentes portes des portes de sortie, chaque signal de sortie décodé principal faisant ainsi en sorte que les portes de sortie fournissent une configuration de commande différente, et incluant un ensemble d'entrées de souplesse, chaque entrée de souplesse étant connectée à une des portes de sortie,

un moyen de connexion (4) extérieur au décodeur pour connecter de façon inverse une ou plusieurs sorties décodées de remplacement à une ou plusieurs entrées de souplesse, chaque sortie décodée de remplacement connectée à une entrée de souplesse faisant ainsi en sorte que les portes de sortie fournissent une configuration de commande unique.

4. Décodeur selon l'une quelconque des revendications 1 à 3, dans lequel le moyen principal (28), le moyen de remplacement (29), et le moyen de sortie (10) sont fabriqués sur une puce à semiconducteur et dans lequel les sorties décodées de remplacement sont connectées à des bornes de sortie (33) et les entrées de souplesse sont connectées à des bornes d'entrée (35) extérieures à la puce et où le moyen de connexion (4) relie une ou plusieurs sorties décodées de remplacement à une ou plusieurs entrées de souplesse par des connexions extérieures à la puce entre les bornes de sortie et les bornes d'entrée.

5. Décodeur selon l'une quelconque des revendications 1 à 4, dans lequel le moyen de sortie (10) comprend un réseau OU formant des combinaisons logiques OU d'un ensemble de signaux de sortie décodés de remplacement pour fournir des signaux de combinaison OU de sortie aux bornes de sortie.

6. Décodeur selon l'une quelconque des revendications 1 à 5, dans lequel les combinaisons logiques OU des signaux de sortie décodés de remplacement sont envoyées à différentes entrées de entrées de souplesse.

7. Décodeur selon l'une quelconque des revendications 1 à 6, dans lequel les portes de sortie sont des portes OU.

8. Unité de commande pour forme des configurations de commande représentées par un ensemble de bits de sortie, l'unité de commande comprenant:

une mémoire à accès sélectif (2) ayant des emplacements adressables, chaque emplacement comportant de zones pour mémoriser une adresse suivante et un code à plusieurs bits,

un moyen (1) pur adresser cycliquement la mémoire à accès sélectif afin de fournir une adresse suivante et un code à plusieurs bits, et un décodeur selon l'une quelconque des revendications 1 à 7.

9. Unité de commande pour former un ensemble de configurations de commande, chaque configuration de commande étant représentée par un ensemble de bits de sortie, l'unité de commande comprenant:

une mémoire à accès sélectif (2) ayant des emplacements adressables, chaque emplacement comportant des zones pour mémoriser une adresse suivante et un ensemble de codes à plusieurs bits, chaque code représentant une des configurations de commande,

un moyen (1) pour adresse cycliquement la mémoire à accès sélectif afin de fournir une adresse suivante et un ensemble de codes à plusieurs bits,

un ensemble de moyens décodeurs (3), chacun des moyens décodeurs (3) étant destiné à décoder un des codes à plusieurs bits provenant de la mémoire à accès sélectif (2), chacun des moyens décodeurs (3) étant selon l'une quelconque des revendications 1 à 7.

10. Dans un circuit intégré, un dispositif connecté puor recevoir une série de codes à plusieurs bits, pur générer des configurations de commande constituées d'un ensemble de signaux de commande, comprenant:

un moyen principal (28), connecté pour recevoir la série de codes à plusieurs bits, pour détecter un groupe principal des codes à plusieurs bits, et pour engendrer des signaux de décodage de code principal correspondant à chacun des codes à plusieurs bits dans le groupe principal;

un moyen de remplacement (29), connecté pour recevoir la série de codes à plusieurs bits, pour détecter un groupe de remplacement de codes à plusieurs bits, le groupe de remplacement comportant des codes à plusieurs bits non inclus dans le groupe principal, et pour engendrer des signaux de décodage de code de remplacement correspondant à chacun des codes à plusieurs bits dans le groupe de remplacement;

un moyen de sortie (33), connecté pour recevoir les signaux de décodage de code de remplacement du moyen de remplacement (29), pour fournir les signaux de décodage de code de remplacement extérieurement du circuit intégré comme signaux de sortie;

un moyen d'entrée (35), connecté pour recevoir des signaux d'entrée fournis extérieurment au circuit intégré, pour fournir les signaux d'entrée intérieurement au circuit intégré; et

un ensemble de portes de sortie (25) pour fournir les signaux de commande, chaque porte de sortie ayant une entrée principale connectée pour recevoir un des signaux de décodage de code principal, une entrée de remplacement connectée pour recevoir un des signaux d'entrée du moyen d'entrée et une sortie fournissant un des signaux de commande;

le moyen d'entrée et le moyen de sortie étant adaptés pour une liaison avec le moyen de connexion (4), extérieurement au circuit intégré et réagissant aux signaux de sortie, pour transmettre de façon inverse les signaux d'entrée.

11. Dispositif selon la revendication 10, incluant en outre:

un moyen de combinaison (30), dans le circuit intégré, connecté pour recevoir un sous-groupe des signaux de décodage de code de remplacement du moyen de remplacement (29), pour engendrer des signaux de décodage de code de remplacement combinés pour des combinaisons présélectionnées de signaux de décodage de code de remplacement, et un moyen pour fournir les signaux de décodage de code de remplacement combainés au moyen de sortie (33), et dans lequel

le moyen de sortie (33) comprend un moyen pour fournir les signaux de décodage de code de remplacement combinés extérieurement du circuit intégré comme signaux de sortie.

12. Dispositif selon la revendication 11, dans lequel le moyen de combinaison (30) comprend un réseau de portes OU (31), chaque porte OU du réseau fornissant comme signal de sortie un des signaux de décodage de code de remplacement combinés et comportant un ensemble d'entrées, chacune étant connectée our recevoir un des signaux de décodage de code de remplacement du sousgroupe des signaux de décodage de code de remplacement.

13. Dispositif selon la revendication 10, dans lequel:

le moyen de sortie (33) comprend un ensemble de voies de sortie (11), adaptées pour être connectées à un fil extérieur au circuit intégré; et

le moyen d'entrée (35) comprend un ensemble de voies d'entrée (12), adaptées pour être connectées à des fils extérieurs au circuit intégré, le moyen de sortie (33) et le moyen d'entrée (35) étant ainsi adaptés pour être sélectivement interconnectés par les moyens de connexion externes.

14. Dispositif selon la revendication 10, dans lequel les codes à plusieurs bits comprennent M bits, où M est un entier et les configurations de commande comprennent N ssignaux de commande, et M est inférieur à N.

15. Dispositif selon la revendication 10, dans lequel les portes de sortie sont des portes OU.

FIG.—1

FIG.—2

FIG.—3

FIG.—5

2

FIG.—4

3